# EUROPEAN PATENT APPLICATION

(11) **EP 3 698 958 A1**
(43) Date of publication of application: **26.08.2020**
(21) Application number: 19158365.7
(22) Date of filing: 20.02.2019
(51) Int. Cl.: B29D 11/00, B29C 64/112, B29C 64/364, B29C 64/194

(54) **METHOD FOR PRINTING A THREE-DIMENSIONAL OPTICAL COMPONENT**

(71) Applicant: Luxexcel Holding B.V., 5656 AE Eindhoven (NL)
(72) Inventor: DE RONDE, Guus, 5656 AE Eindhoven (NL)
(74) Representative: Loock, Jan Pieter

(57) **Abstract**

Method and inkjet printer for printing a three-dimensional optical component (2) with an inkjet printer (1), wherein the three-dimensional component (2) is built up inside the printer (1) in successive printing steps through a targeted placement of droplets (6) of printing ink at least partially side by side and one above the other, wherein at least one printing step (P) is followed by an evacuation step (E) during which a bell jar (7) is lowered over the printed structure (2) and a defined atmosphere is provided inside the bell jar (7).

## Description

### BACKGROUND

The present invention relates to a method for printing a three-dimensional optical component with an inkjet printer, wherein the three-dimensional component is built up inside the printer in successive printing steps through a targeted placement of droplets of printing ink at least partially side by side and one above the other.

Printing three-dimensional optical components such as lenses, mirrors and the like is known from the prior art. The optical structures are built up layer by layer through a targeted placement of droplets of printing ink. The droplets are ejected towards a substrate by ejection nozzles of the print head of an inkjet printer. In order to reduce overall printing time and in order to improve accuracy of the printing process, the printed structure is repeatedly cured during the printing process. Preferably, the deposited droplets are cured through irradiation with laser or ultra-violet (UV) light. As disclosed in EP 2 391 473 A1, a curing unit is usually incorporated into the print head of the inkjet printer, allowing a fast printing process. To prevent deterioration of the printed structure through curing, it is however necessary to carry out the curing process under improved atmospheric conditions. E.g. WO 2016/188 930 A1 discloses curing under inert atmospheric conditions in order to improve the curing process and to minimize oxidation processes.

Suchlike methods suffer from the drawback that it is necessary to maintain inert atmospheric conditions throughout the printing chamber, requiring unnecessary large amounts of inert gas and a perfectly sealed and well-monitored printing chamber.

### SUMMARY

It is a purpose of the present invention to provide a method for printing three-dimensional optical components in a simpler, faster and more efficient way compared to the state of the art. In particular, the present invention aims at improving the efficiency and quality of curing during the printing process as compared to the state of the art. To this end, the present invention provides a printer for carrying out suchlike method.

According to the present invention, this object is achieved by a method for printing a three-dimensional optical component with an inkjet printer, wherein the three-dimensional component is built up inside the printer in successive printing steps through a targeted placement of droplets of printing ink at least partially side by side and one above the other, characterized in that at least one printing step is followed by an evacuation step during which a bell jar is lowered over the printed structure and a defined atmosphere is provided inside the bell jar.

Herewith it is advantageously possible to cure the printed structure under optimal atmospheric conditions with minimal effort. In particular, the volume in which the defined atmosphere has to be provided is minimized and can be controlled easily. Moreover, a perfect air-tight sealing of the printing chamber is no longer necessary.

Preferably, the volume of the bell jar is smaller than the volume of a printing chamber of the inkjet printer. The targeted placement of droplets of printing ink is obtained through ejection of droplets of printing ink by nozzles of a print head of the inkjet printer. In the sense of the present invention, the printed structure comprises the final optical component as well as all intermediates, i.e. all intermediate structures obtained after completion of a number of printing steps.

In a preferred embodiment, the bell jar is evacuated during the evacuation step and a vacuum is provided inside the bell jar. Alternatively, the bell jar is filled with an inert gas during the evacuation step and an inert atmosphere is provided inside the bell jar. Preferably, the inert atmosphere is provided through injection of an inert gas such as Nitrogen, Argon, Helium and/or Carbon Dioxide into the bell jar.

In a preferred embodiment, the evacuation step is followed by a curing step during which the printed structure is cured under the defined atmospheric conditions. Preferably, the printed structure is cured through irradiation with ultra-violet light.

In a preferred embodiment, the bell jar is lifted from the printed structure at the end of the curing step. Ambient atmospheric conditions are preferably provided inside the bell jar prior to lifting.

Another object of the present invention is an inkjet printer for printing three-dimensional optical components according to any of the preceding claims, comprising a print head, a curing unit and an evacuation unit characterized in that the evacuation unit comprises a bell jar. The inkjet printer according to the present invention is apt at printing three-dimensional optical components with the method according to the present invention and thus imparts likewise advantages.

### BRIEF DESCRIPTION OF THE DRAWINGS

**Figure 1** schematically illustrates a printing method according to an exemplary embodiment of the present invention.
**Figure 2** schematically illustrates a printer according to an exemplary embodiment of the present invention.

### DETAILED DESCRIPTION

The present invention will be described with respect to particular embodiments and with target to certain drawings but the invention is not limited thereto but only by the claims. The drawings described are only schematic and are non-limiting. In the drawings, the size of some of the elements may be exaggerated and for illustrative purposes may not be drawn to scale.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

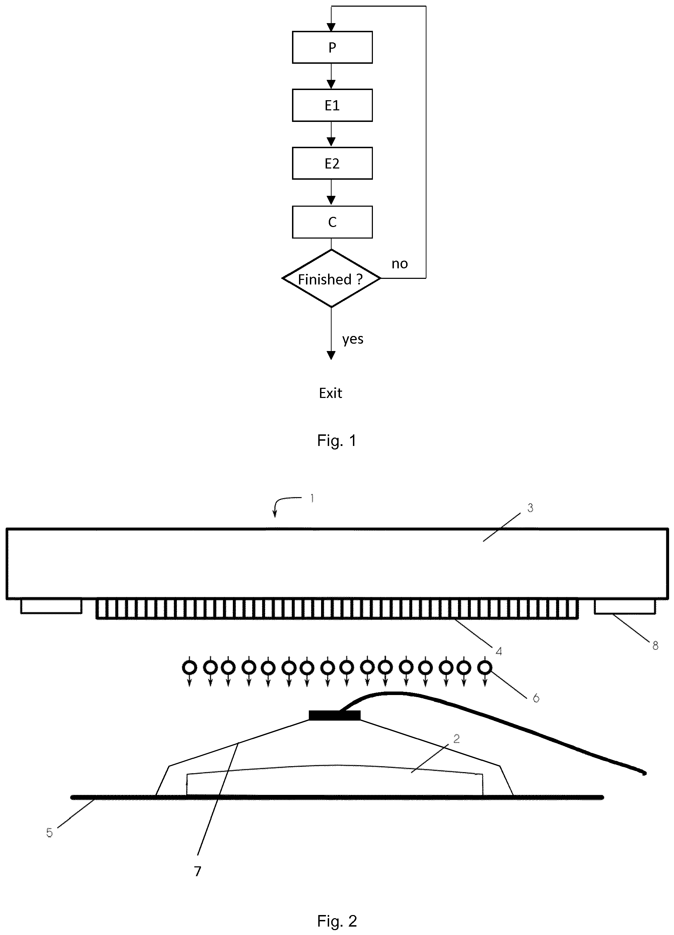

In **Figure 1** a method for printing a three-dimensional optical component according to an exemplary embodiment of the present invention is schematically illustrated. The three-dimensional optical component 2 is printed through a targeted placement of droplets 6 of printing ink side by side and one above the other in several consecutive printing steps P by means of a print head 3, wherein in each printing step P a plurality of droplets 6 is ejected simultaneously by a plurality of ejection nozzles 4 of the print head 3. The three-dimensional component 2 is thus build up layer by layer. Each printing step P is followed by an evacuation step E. During the evacuation step E, a bell jar 7 is lowered over the optical structure 2 printed so far. This first lowering step E1 is followed by an atmosphere providing step E2. During the atmosphere providing step E2, a defined atmosphere is provided inside the bell jar 7. The defined atmosphere is chosen such that optimal curing conditions are provided. This comprises in a first embodiment evacuating the bell jar 7 and providing a vacuum chamber surrounding the printed structure 2. In an alternative embodiment this comprises providing an inert atmosphere inside the bell jar 7. This is obtained, for example, through the injection of an inert gas such as nitrogen, argon, helium and/or carbon dioxide. The evacuation step E is followed by a curing step C during which the printed structure 2 is preferably cured through irradiation from a laser or UV light source 8. Only after curing is finished, i.e. at the end of the curing step C, is the bell jar 7 lifted. In a preferred embodiment, ambient atmospheric conditions are provided inside the bell jar 7 prior to lifting. These steps are repeated until the component 2 is finished. Without loss of generality, the embodiment described here assumes that every printing step P is followed by an evacuation step E and a curing step C. It is, however, in the scope of the present invention to alter the number and interval of evacuation steps E and curing steps C depending on the requirements of the overall printing process, cost and time. For example, a curing step C can be carried out only after every other printing step P or after a fixed number of layers has been printed. Each curing step C may be preceded by an evacuation step E. Alternatively, this may only hold for certain curing steps C.

In **Figure 2** a printer 1 according to an exemplary embodiment of the present invention is schematically illustrated. The printer 1 is apt at printing three-dimensional optical components 2 through a droplet-on-demand printing process as illustrated in **Figure 1****.** To this end, the printer 1 is provided with a print head 3. The print head 3 comprises a multitude of ejection nozzles 4 from which droplets 6 of printing ink are ejected towards a substrate 5. In this way, the optical component 2 is built up layer by layer through targeted placement of droplets 6 of printing ink. The printed layers are cured using a curing unit 8. The curing unit 8 preferably comprises a UV light source which is used to irradiate the layers to be cured. To obtain optimal results during curing and to prevent deterioration of the printed structure through curing, curing should be carried out under a defined atmosphere. The defined atmosphere is chosen such that processes deteriorating the quality of the optical component 2, e.g. oxidation processes, are minimized. The defined atmosphere comprises a vacuum or an inert atmosphere obtained through injection of an inert gas. Providing the defined atmosphere inside the entire printing chamber is complicated, expensive and unnecessary as only the structure 2 has to be surrounded by the defined atmosphere. Therefore, the printer 1 according to a preferred embodiment of the present invention comprises a bell jar 7 that can be lowered over the structure 2 before curing during an evacuation step E. The volume of the bell jar 7 is reduced compared to the volume of the overall printing chamber, saving time, energy and inert gas. Moreover, the bell jar 7 can be easily sealed with respect to the substrate 5, minimizing losses as compared to the full printing chamber.

### KEY TO FIGURES

- 1: Printer
- 2: Printed optical component, printed structure
- 3: Print head
- 4: Ejection nozzle
- 5: Substrate
- 6: Droplet of printing ink
- 7: Bell jar
- 8: Curing unit
- P: Printing step
- E: Evacuation step
- E1: Lowering step
- E2: Atmosphere providing step
- C: Curing step

## Claims

1. Method for printing a three-dimensional optical component (2) with an inkjet printer (1), wherein the three-dimensional component (2) is built up inside the printer (1) in successive printing steps through a targeted placement of droplets (6) of printing ink at least partially side by side and one above the other, **characterized in that** at least one printing step (P) is followed by an evacuation step (E) during which a bell jar (7) is lowered over the printed structure (2) and a defined atmosphere is provided inside the bell jar (7).

2. Method according to claim 1, wherein the bell jar (7) is evacuated during the evacuation step (E) and a vacuum is provided inside the bell jar (7).

3. Method according to claim 1, wherein the bell jar (7) is filled with an inert gas during the evacuation step (E) and an inert atmosphere is provided inside the bell jar (7).

4. Method according to claim 3, wherein the inert atmosphere is provided through injection of an inert gas into the bell jar (7).

5. Method according to one of the preceding claims, wherein the evacuation step (E) is followed by a curing step (C) during which the printed structure (2) is cured under the defined atmospheric conditions.

6. Method according to claim 5, wherein the printed structure (2) is cured through irradiation with ultra-violet light.

7. Method according to claim 5 or 6, wherein the bell jar (7) is lifted from the printed structure (2) at the end of the curing step (C).

8. Method according to claim 7, wherein ambient atmospheric conditions are provided inside the bell jar (7) prior to lifting.

9. Method according to any of the preceding claims, wherein the volume of the bell jar (7) is smaller than the volume of a printing chamber of the inkjet printer (1).

10. Method according to any of the preceding claims, wherein the targeted placement of droplets (6) of printing ink comprises an ejection of the droplets (6) of printing ink by nozzles (4) of a print head (3) of the inkjet printer (1).

11. Inkjet printer for printing three-dimensional optical components according to any of the preceding claims, comprising a print head, a curing unit and an evacuation unit **characterized in that** the evacuation unit comprises a bell jar.
